# EUROPEAN PATENT APPLICATION

(11) **EP 2 889 658 A1**
(43) Date of publication of application: **01.07.2015**
(21) Application number: 12883153.4
(22) Date of filing: 21.08.2012
(51) Int. Cl.: G02B 6/10, G02F 1/13357, B43L 1/10

(54) **SURFACE STRUCTURE FOR LIGHT GUIDE PLATE AND APPLICATION AND MANUFACTURING METHOD THEREFOR**

(71) Applicant: Zhang, Dahai, Shenzhen, Guangdong 518010 (CN)
(72) Inventor: YANG, Yanping, Shenzhen Guangdong 518010 (CN)
(74) Representative: Krauns, Christian
(86) International application number: PCT/CN2012/080430
(87) International publication number: WO 2014/029082

(57) **Abstract**

A surface texture of a light guide plate (101), use and manufacturing method thereof, wherein the surface texture includes convex-concave structures (301, 401, 501), the curved surfaces of the convex-concave structures are optically smooth, the arithmetical mean deviation of the surface roughness profiles isn't greater than 1/8 shortest wavelength of working light in the light guide plate. By using the light guide plate with the surface texture, not only can total reflection be performed in the light guide plate, but also the outer surface of the light guide plate appears to have the effect similar to diffuse reflection, so that specular reflection of the surface of the classical light guide plate can be overcome.

## Description

### BACKGROUND OF THE INVENTION

### 1. Technical Field

The invention relates to the field of light guides, and more particularly, to a surface texture of a light guide plate, a light guide plate with the surface texture, a product using the light guide plate and a manufacturing method of the surface texture.

### 2. Description of Related Art

A light guide is an optical constituent by which light can be transmitted with very low reflection loss through the total reflection of the inner surface of a medium. Generally, the light guides are divided into two categories: planar light guides and fiber light guides. A plane light guide plate is a typical planar light guide, and can be referred to as a light guide plate for short. Plane glass in vacuum or air is the simplest light guide plate.

When light travels in the light guide plate, the light can be transmitted without reflection loss substantially through total reflection if the light meets the requirement of the total reflection. The requirement of the total reflection is that an incident angle is greater than a total reflection angle, the incident angle is the angle between the light travelling direction and the normal direction of the inner surface of the light guide plate, the total reflection angle is dependent on a ratio of refraction coefficients of the material of the light guide plate and environmental media. The light met the requirement of the total reflection is totally reflected back into the light guide plate, the light propagation path is serrated in shape, and the light will not emit from the surface of the light guide plate. Ideally, seen from the outside of the light guide plate, the surface of the light guide plate doesn't emit light.

Recently, a lighting blackboard is presented based on the classical light guide plate. By using the total reflection of the light guide plate, the lighting blackboard transmits light into the entire inside of the light guide plate. When there is no handwriting on a smooth surface of the lighting blackboard, the light is totally reflected by the smooth surface, limited in the light guide plate and doesn't emit from the surface. When the lighting blackboard is wrote via paints, such as paints made by dispersing titanium dioxide superfine powders with a high refraction coefficient into resin solution, the interface between the light guide plate and air is replaced by the paints, the light which would be totally reflected if there were no paint on the surface enters the paints, and encounters the titanium dioxide superfine powders, then the light is diffusedly refracted and reflected, part of the light emits from the light guide plate through the paints. A viewer can see the light emitting from the handwriting, it appears that the handwriting is lighting and has some brightness.

The general lighting blackboards based on the classical light guide plate has a smooth and plane mirror surface, the mirror surface can provides total reflection for the light transmitted in the inside, and meanwhile, the mirror surface can also reflect the external light. The specular reflection of the mirror surface can generates mirror images of surroundings, such as windows and fluorescent tubes, some mirror images result in glare and reflection. The clear and bright mirror images mix with the handwriting, which seriously interferes with viewer's visual identification of the content on the blackboard. The interference to the visual identification caused by the clear and bright mirror is referred as specular reflection interference.

The higher the clarity of the mirror images, the higher the brightness, and the interference to the visual identification is more serious.

The specular reflection seriously interferes with viewer's visual identification of the content on the blackboard, which makes the comfort of the use of the lighting blackboard reduced. Using the lighting blackboard for a long time has bad effects on viewer's vision, such as asthenopia, even worse effects, such as vertigo. For example, a China patent application with application no. 200720001072.3 discloses a lighting blackboard in which an optical PMMA plate acts as a light guide plate. A China patent application with application no. 200720171610.3 discloses a electron lighting plate, in which a transparent panel acts as a light guide constituent. The lighting blackboards disclosed by those applications are common lighting blackboards based on the classical light guide plate, and have the disadvantage of the specular reflection interference. The specular reflection interference prevents the common lighting blackboards from the application in the field of teaching. It has been nearly 20 years since the common lighting blackboard was advanced, the market of the lighting blackboard applied on advertisements propaganda has been formed a certain scale, however, the lighting blackboard has been not able to come into the field of education and class.

In order to reduce or eliminate the specular reflection on a surface, there are two ways: decreasing the reflection factor of the surface and using a rough diffusing surface. There are many patents and applications about the two ways in the field of anti-reflection television screen.

Decreasing the reflection factor of the surface is generally implemented by coating an anti-reflective layer on the surface via vacuum evaporation. However, the cost of this way is expensive, and the anti-reflective layer is fragile and easy to be damaged. In addition, the anti-reflective layer is easy to lose efficacy for slightly pollution of the layer, therefore, the layer isn't suitable for use in the field of lighting blackboards.

The rough diffusing surface are largely applied on the surface of the anti-glare film, such as the anti-glare film of a liquid-crystal display, in order to eliminate specular reflection and prevent from glare through diffusing reflection effects of the rough surface. However, when the surface of the light guide plate is made as a rough diffuse reflection surface, the light transmitted in the light guide plate is diffusedly reflected and refracted by the rough surface, a larger amount of light emits from the light guide plate, which makes the rough area appears to be lighting. This principle is largely applied on lighting indicators and backlights. A China patent with application no. 200310109407.X discloses a photoelectric display device made from transparent material, patterns with rough surfaces are formed on the surface of the transparent light guide plate via blast sanding, chemical etching, etc. The light emitted from the area of the rough patterns via diffusing refraction makes the patterns appear to be lighting, the other smooth areas of the surface don't emit light, and thus a sharp contrast is formed. In the backlight field of liquid crystal display television and the like, the lighting surface of the light guide panel is also a spread reflection surface which can be produced by mold pressing, printing, etching and so on, there are many patents about this kind of the light guide panel.

When a rough surface is applied on the surface of the light guide plate, the total reflection requirement of the light guide plate can't be met, the rough area appears to be lighting, so that the rough surface can't be applied on the field of lighting blackboards.

Therefore, the light guide plate which meets the requirement of total reflection and can solve the problem of the specular reflection is required in order to be used for some applications such as the lighting blackboard.

### BRIEF SUMMARY OF THE INVENTION

A technical problem to be solved by the present invention is to provide a surface texture of a light guide plate, by using the light guide plate with the surface texture, not only can total reflection be performed in the light guide plate, but also the outer surface of the light guide plate appears to have the effect similar to diffuse reflection, so that specular reflection of the surface of a classical light guide plate can be overcome. A light guide plate using the surface texture and a product using the surface texture are also provided according to the present invention. A manufacturing method for the surface texture is also provided according to the present invention.

The present invention adopts the following technical solutions to solve the technical problem: providing a surface texture of a light guide plate, an outer surface of the light guide plate is optically smooth.

Preferably, an arithmetical mean deviation of roughness profiles of the optically smooth surface (Ra) is not greater than 1/8 the shortest wavelength of working light in the light guide plate.

Preferably, an arithmetical mean deviation of roughness profiles of the optically smooth surface is not greater than 50 nanometers.

Preferably, an arithmetical mean deviation of roughness profiles of the optically smooth surface is not greater than 10 nanometers.

Preferably, the convex-concave structure is selected from any one or combination of a hill-like convex-concave structure, a strip convex-concave structure and a wave convex-concave structure.

Preferably, when the surface texture of the light guide plate according to the present invention uses a wave convex-concave structure, a guide line of the surface of the convex-concave structure is selected from any one or combination of regular curves, such as a circular arc wave line, ellipse wave line, sine wave line, parabola wave line, and randomly irregular wave lines.

Preferably, a width of the convex-concave structure is in the range of 3 microns to 10 millimeters.

Preferably, a width of the convex-concave structure is in the range of 30 microns to 1 millimeter.

Preferably, a width of the convex-concave structure is in the range of 100 microns to 300 microns.

A light guide plate is further provided, comprising two outside surfaces opposite to each other, partial area of at least one of the two outer surfaces using the surface texture according to the present invention.

Preferably, an extending direction of the convex-concave structure of the light guide plate according the present invention is parallel with a pointing direction of working light in the light guide plate.

Preferably, the light guide plate according to the present invention is composited by layered materials.

Preferably, a surface layer in the layered materials has a thickness ranged from 30 microns to 3 millimeters.

Preferably, hardness and wearability of a surface layer in the layered materials are higher than hardness and wearability of an inner layer in the layered materials.

Preferably, reflectance of a surface layer in the layered materials is lower than reflectance of an inner layer in the layered materials.

A lighting blackboard is further provided, comprising a light guide plate and work sources, the working sources being arranged at end faces of the light guide plate, wherein the lighting blackboard comprises the light guide plate according to the present invention.

Preferably, the extending direction of the convex-concave structure of the surface of the light guide plate of the lighting blackboard is vertical.

A surface forming method is further provided, including:
Manufacturing convex-concave structures on a surface of a base material and then polishing surfaces of the convex-concave structures;
Wherein the polishing step comprises: coating a surface of a material to be polished with a transparent coating; and solidifying the transparent coating to a film, wherein a surface of the film is optically smooth.

Preferably, the transparent coating is selected from materials used for forming the film with higher hardness or wearability than material to be polished.

Preferably, the transparent coating is selected from materials used for forming the film with lower reflectance than material to be polished.

The surface texture of the light guide plate implemented according to the present invention, the lighting blackboard using the light guide plate and the manufacturing method for the surface texture have the following advantages: convex-concave structures are formed on the light guide plate and the convex-concave structures are polished in order to produce optically smooth convex-concave surface, so that outer light can achieve the effect similar to optical diffuse reflection, the specular reflection is reduced, in addition, the light guide plate using the surface texture meets the requirement of total reflection, the working light in the light guide plate will not travel out from the light guide plate, which isn't similar to a rough surface, thus the light guide plate with good anti-reflective performance and the product thereof can be obtained.

### BRIEF DESCRIPTION OF THE SEVERAL VIEWS OF THE DRAWINGS

The present invention will be explained below with reference to the accompanying drawings, wherein:
Fig. 1 is a schematic view of the reflection of outside light reflected by the surface texture of the light guide plate according to the present invention;
Fig. 2 is a schematic view of reflection and refraction of interior light reflected and refracted by the surface texture of the light guide plate according to the present invention;
Fig. 3 is a schematic view of the hill-like convex-concave structures of the surface texture of the light guide plate according to the present invention;
Fig. 4 is a schematic view of the strip convex-concave structures of the surface texture of the light guide plate according to the present invention;
Fig. 5 is a schematic view of the wave convex-concave structures of the surface texture of the light guide plate according the present invention;
Fig. 6 is a schematic view of the wave guide lines of the wave convex-concave structure according to the present invention;
Fig. 7 is a schematic perspective view of the wave spread reflection light guide plate;
Fig. 8 is a schematic cross-sectional view of the wave spread reflection light guide plate;
Fig. 9 is a schematic cross-sectional view of the light guide plate, wherein part of the surface of the light guide plate uses a spread reflection surface;
Fig. 10 is a schematic cross-sectional view of the light guide plate, wherein the light guide plate is formed by compounding two layer materials; and
Fig. 11 is a schematic structure view of the spread reflection lighting blackboard.

### DETAILED DESCRIPTION OF THE INVENTION

In order to further understand the present invention, preferred implementations of the present invention will be explained below in detail with reference to the accompanying drawings and embodiments. It is to be understood that the following description is merely to explain features and advantages of the present invention and is no way intended to limit the claims of the invention.

### Convex-concave surface texture

The surface texture of the light guide plate according to the present invention can be achieved by configuring the smooth surface of the light guide plate as the surface with convex-concave structures and making the outer surfaces of convex-concave structures optically smooth, the surface texture of the outer surfaces have two features, one feature is that the outer surfaces are curved surfaces, the other one is that the outer surfaces are optically smooth. Therefore, the outer surface can be referred as a spread reflection surface.

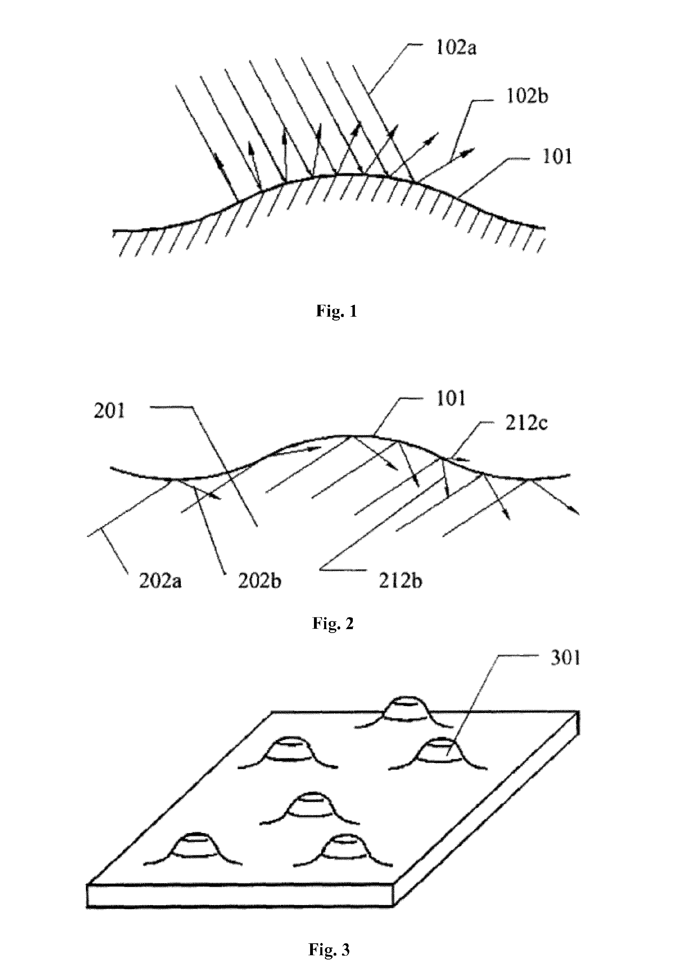

Optical features of the convex-concave structures of the light guide plate according to the present invention will be explained below in detail with reference to fig. 1 and fig. 2.

Fig. 1 is a schematic view of the partial surface profile of the spread reflection surface according to the present invention and spread reflection of the external light directed to the partial surface profile.

The curved spread reflection surface 101 is resulted by the convex-concave structures. For the optically smooth surface, the light is specularly reflected at each place on the surface. For the parallel incident light 102a, the directions of the corresponding reflected light 102b are changed with the curve of the convex-concave surface, the reflected light 102b are distributed spreadly.

The spatial distribution of the reflected light can be estimated through geometrical optics based on the geometrical shapes of the curved surface.

Since the reflected light is distributed spreadly, the spread reflection and diffuse reflection are very similar on macroscopic visual effects, i.e. the mirror images of the outside objects can be presented on both surfaces, both of the surfaces can reduce and eliminate the specular reflection thereof. The curved surface overcomes the specular reflection interference of the smooth and planar surface of the classical light guide plate.

Fig. 2 shows the reflection, refraction and total reflection of the light travelling in the light guide plate with a spread surface.

Working light 202a travels in a transparent medium 201, when the working light 202a encounters the inner side of a spread reflection surface 101, some of the working light 202a meets the total reflection requirement and therefore is totally reflected, total reflection light 202b is turned back into and travels in the transparent medium 201. The optically smooth surface provides necessary conditions for light total reflection, thus the light guide plate with the optically smooth surface is able to guide light by total reflection.

Fig. 2 discloses the principle of guiding light via total reflection by the surface texture according to the present invention. Fig. 1 discloses the principle of the reflection similar to diffuse reflection according to the present invention, wherein the specular reflection of the classical light guide plate is overcome. By combining both of the principles, the present invention solves the corresponding technical problem.

In fig. 2, some of the light 212b don't meet the total reflection requirement, they occurs reflection and refraction on the internal surface rather than total reflection to give reflection light 212b and refraction light 212c. The reflection light 212b turns back into the light guide plate, and the refraction light 212c emits from the light guide plate, which causes some loss. The loss caused by the curve of the surface can be referred as surface curve loss. Some surface curve loss is the main difference between the classical light guide plate and the light guide plate using the light guide plate according to the present invention. The curve loss can be reduced by adjusting the convex-concave structures of the surface and some parameters, even to be close to zero or ignored.

The optical features of the optically smooth convex-concave surface disclosed by fig. 1 and fig. 2 and the basic principles of the present invention have been described, now indicators and standards about optical smoothness will be explained below.

The optical smoothness is a concept opposite to roughness. An optically smooth surface produces specular reflection or refraction, and a rough surface produces diffuse reflection or diffuse refraction. In the past generally believed that if the roughness of a surface is less than a limit, the surface is considered to be a smooth surface, otherwise, the surface is considered to be a rough surface. However, the limit used to define optical smoothness and roughness is not a certain value. A recognized limit is smaller than one wavelength, and particularly can be one wavelength, 1/2 wavelength, 1/8 wavelength and so on. 1/8 wavelength is widely recognized and comes from the requirement of Raileigh Limit in classical optics. According to the requirement, for optical constituents and the combination of the optical constituents, if optical path differences between respective parts of image formation light are less than 1/4 wavelength, the optical combination can be considered as a substantially perfect optical combination. The optical path difference of reflected light in the case of normal incidence is double of that in the case of a rough surface, therefore, the limit of 1/8 wavelength is presented. When the arithmetical mean deviation of the surface roughness profiles Ra isn't larger than 1/8 the shortest working wavelength, the surface can be considered as a substantially perfect and optically smooth surface. This is in accordance with a standard summarized by the long-term processing practice of traditionally optical constituents.

In fact, the smaller the roughness of the surface roughness profiles, the more perfect and optical smooth the surface will be, and there is no precise limit between the smooth and rough surfaces. However, it is necessary to define an indicator and a standard used for guiding production. Generally, roughness is selected as an indicator.

With the further understanding of the surface texture, the past surface profiles are further divided into waviness profiles of long wave constituents and roughness profiles of short wave constituents, the wavelength limit for the division is Lc. So the roughness indicator in the past is further subdivided into a waviness indicator used for describing the long wave constituents and a roughness indicator used for describing the short wave constituents, and new standards are formed, the new standards include international standard ISO4287-1997, Chinese National Standard GB/T 3505-2000 and the latest version thereof.

In a new framework, the standard of optical smoothness should be adjusted from the general understanding that surface roughness is less than an indicator to that the roughness of a surface roughness profiles is less than an indicator, thus the physical meaning of the optical smoothness will be more clear and precise. Whereby the standard of optical smoothness is provided according to the present invention, i.e. arithmetical mean deviation Ra isn't greater than 1/8 the shortest working wavelength.

When working light in a light guide plate is white light, the shortest wavelength is about 390 nanometers, 1/8 wavelength is about 50 nanometers.

When working light in a light guide plate is monochromatic green light with a wavelength of 550 nanometers, the arithmetical mean deviation Ra can be widened to 70 nanometers. When the working light is red light with a wavelength of 700 nanometers, the arithmetical mean deviation Ra can be further widened to 100 nanometers.

The rougher a surface of a light guide plate, the greater the chance that working light emits from the light guide plate for the microcosmic roughness of the surface. The more smooth a surface of a light guide plate, the less the chance that working light emits from the light guide plate for the microcosmic roughness of the surface, and the light guide plate appears to be more transparent.

As a preferred embodiment according to the present invention, the arithmetical mean deviation of the surface roughness profiles Ra is selected to be less than 10 nanometers. This light guide plate, even the light in this light guide plate has a great intensity, still appears to be very transparent.

Convex-concave structures will be explained below in detail with reference to figures 3 to 5 according to preferred embodiments.

### Embodiment of surface texture 1:

Fig. 3 shows a first embodiment of the convex-concave structures, particularly shows the appearance of hill-like protrusions 301 with optically smooth surfaces. The hill-like protrusions are generated on a surface of a transparent medium. The convex-concave structures are hill-like in shape, just like independent small hills. The outer surface of the hill-like protrusion is optically smooth, the mean deviation of the roughness profiles of the outer surface isn't greater than 1/8 the shortest wavelength of the working light.

The hill-like protrusions can be generated by printing transparent glue points on the surface through inkjet printing and then solidifying the glue points by ultraviolet light. Also, injection molding or other methods can be used for molding the protrusions. 3D printers can also be used for molding.

### Embodiment of surface texture 2:

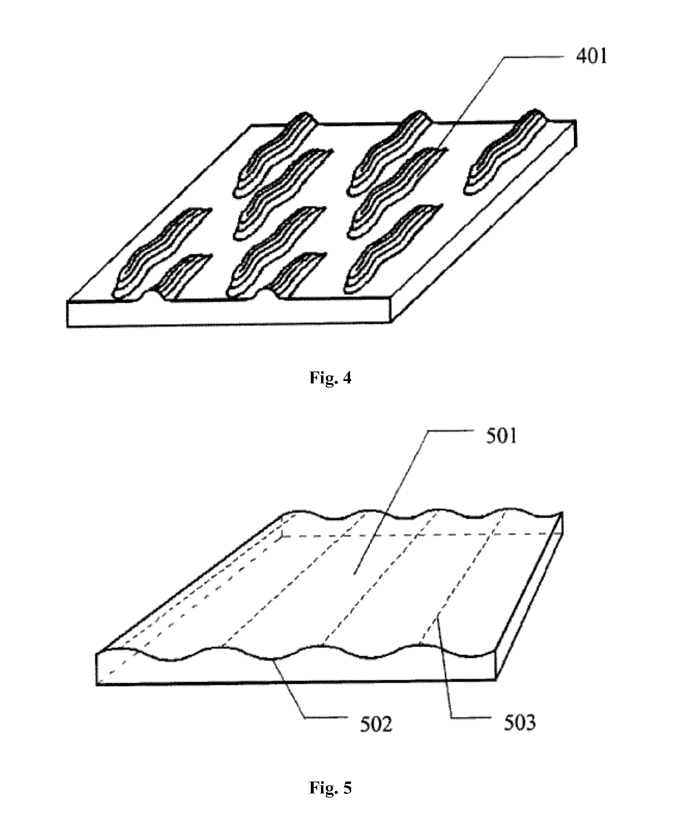

Fig. 4 shows a second embodiment of the convex-concave structures, particularly shows the appearance of strip convex-concave structures with smooth surfaces. The convex-concave structures are strip-shaped, just like extending mountain ridges. The surfaces of the strip convex-concave structures are optically smooth. When the working light is white light, the mean deviation of the roughness profiles of the structure is required to be not greater than 50 nanometers.

The strip convex-concave structure 401 is a slightly curved strip, in other cases the structure can also be a straight strip, a curved strip and a strip with more complex structure. The curved strip can be C-shaped, Y-shaped, or even O-shaped, it will not be described in detail here. The straight strip and the slightly curved strip are commonly used.

Generally, a extending direction along a long dimension of the strip convex-concave structure can be referred as a longitudinal direction, the direction perpendicular to the longitudinal direction can be referred as a transverse direction, the dimension along the longitudinal direction can be referred as length, the dimension along the transverse direction can be referred as width, and the ratio of the length to the width can be referred as aspect ratio. The aspect ratio of the strip convex-concave structure is in the range of several times to several decuples, the aspect ratio of a long strip convex-concave structure is in the range of several decuples to several hundred times, the hill-like convex-concave structure can be regarded as the convex-concave strip structure with a ratio of about 1, the ratio of a long hill-like convex-concave structure is one in the range of the ratios of the hill-like and strip structures. The hill-like convex-concave structure, strip convex-concave structure and long strip structure can be regarded as convex-concave structures with different aspect ratios. A large amount of consistent convex-concave structures with regular shapes and the same extending direction forms a strip convex-concave surface.

### Embodiment of surface texture 3:

Fig. 5 shows a third embodiment of the convex-concave structure, particularly shows the appearance of wave convex-concave structures with smooth surfaces.

In this embodiment, convex and concave circular arcs forms a circular arc wave line 502 which acts as a guide line of a circular arc wave surface 501, a straight line acts as a wave surface generatrix 503. The surfaces of the wave convex-concave structures are optically smooth.

The wave lines include but not limit to regular curves, such as circular arc wave lines, elliptic wave lines, sine wave lines, parabola wave lines, and one of or combination of randomly changed irregular wave lines.

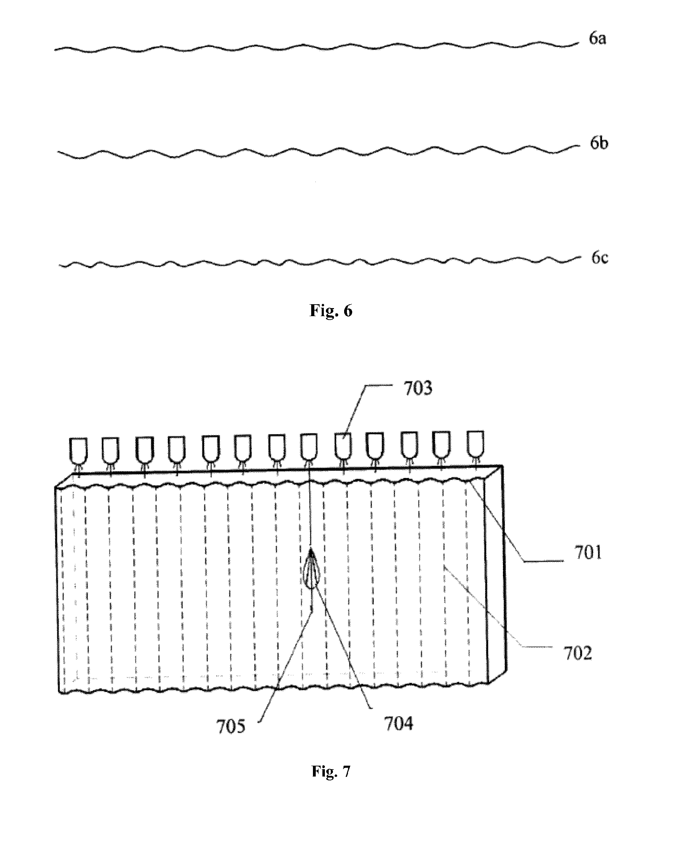

In particular, fig. 6 illustrates different kinds of wave lines which can act as a guide line.

The elliptic wave line 6a is formed by connecting convex elliptic arcs with concave elliptic arcs in sequence.

The sine wave line 6b is a continual sine curve.

The irregular wave line 6c is a wave line drawn randomly.

Different kinds of wave lines have different spread reflection effects. Based on reflection laws of geometrical optics, a person skilled in the prior art can create different wave lines by using known mathematical knowledge.

The generatrix of the wave surface can be a straight line, can also be a curve. The generatrix is generally a straight line. The wave convex-concave structure with a linear generatrix can be regarded as a strip convex-concave structure with an infinitely great aspect ratio. The greater the aspect ratio, the smaller the loss of the surface curve loss. The surface curve loss of the wave convex-concave structure with a linear generatrix can be reduced to the lowest level.

Different kinds of convex-concave structures, such as the hill-like, strip and wave convex-concave structures have different features.

In the aspect of reducing specular reflection, the effects of the hill-like convex-concave structure are the best, next are the strip convex-concave structure and the long strip convex-concave structure, and last is wave convex-concave structure. That is the smaller the aspect ratio, the better the effects.

Quite the opposite in the aspect of reducing the surface curve loss, the surface curve loss of the wave convex-concave structure with the linear generatrix is the smallest, next are the long strip convex-concave structure and the strip convex-concave structure, the surface curve loss of the hill-like convex-concave structure is the largest. That is the greater the aspect ratio, the better.

In specifical selection, surface specular reflection reduction and surface curve loss reduction should be balanced. Generally, the wave convex-concave structure with the linear generatrix meets the requirements of reducing the reflection from the surface, so that the wave convex-concave structure should be a primordial consideration.

For example, when applied in the lighting blackboard, it has been found that, the wave convex-concave structure with the linear generatrix can meet the requirements of reducing the reflection from the surface in practice, and the surface curve loss of the structure is very small, so that the wave convex-concave structure with the linear generatrix should be a primordial consideration.

Some preferred shapes used for the convex-concave structures are described. However, the effects of the width of convex-concave structures should be considered.

The width of a convex-concave structure refers to the mean diameter of hill-like convex-concave structures, the mean width of the strip convex-concave structures or the mean wavelength of the wave convex-concave structures.

The width of a convex-concave structure will affect the external visual effects of the spread reflection surface of the structure and the manufacturing difficulty of the convex-concave structure. The smaller the width of the convex-concave structure, the finer the surface appears to be. If the width of the convex-concave structure is too small, the manufacturing difficulty will be increased, also, the wearability and the service life of the convex-concave structure will be reduced.

The preferred width of the convex-concave structure is in the range from several microns to several millimeters.

### Embodiment of surface texture 4:

The surface of the convex-concave structure is a wave surface formed by circular arc, the chord length of the circular arc is 3 microns, the height of the circular arc is 0.5 microns, the convex-concave structure is made from PC resins, and is formed by a press molding process with high accuracy which needs a long time for heat preservation. After the formation, the convex-concave structures of the surface can't be found by the naked eye, there is no specular reflection that can cause image formation, so that the surface with the convex-concave structures can eliminate specular reflection, which is similar to the effect of diffuse reflection of a rough surface.

### Embodiment of surface texture 5:

The guide line of the sine wave surface is a sine wave, the wavelength of the sine wave is 10 millimeters, the height of the sine wave is 0.6 millimeter, the wave surface is optically smooth. The wave surface has a large size, can be applied on the light guide plate used for advertisement which can be watched by viewers at a greater distance than 5 meters from the wave surface. The roughness of the wave surface can't be found by the naked eye from a greater distance, therefore, to some degree, specular reflection can be eliminated.

Preferably, the width of the convex-concave structure is in the range from tens of microns to hundreds of microns, such as the range from 30 microns to 800 microns.

More preferably, the width of the convex-concave structure is in the range from 100 microns to 300 microns. For example, when the width is 200 microns, the roughness also can't be found at close range, and the convex-concave structures can be generated easily.

### Spread reflection light guide plate

Preferred implementations of the surface texture of the light guide plate according to the present invention will be explained below with reference to figures 7-9.

When one, both, part or all parts of the surfaces of a light guide plate uses the surface texture of the light guide plate according to the present invention which has the convex-concave structures and the surface of the convex-concave structure achieves optical smoothness, the light guide plate can be referred as a spread reflection light guide plate.

Generally, the surface of a light guide plate facing viewers and the area of the surface with specular reflection interference required to be eliminated are provided with convex-concave structures. The surface texture of the light guide plate can be selectively used for other parts of the surface and the back surface of the light guide plate.

### Embodiment of the light guide plate 1:

The surface of a plane light guide plate facing outwards is provided with long strip convex-concave structures, the longitudinal width of the long strip convex-concave structure is about 80 millimeters, the transverse width is about 100 microns, the height is about 10 microns. The cross sectional profile of the convex-concave structure is a bell-shaped curve, the mean deviation of the surface roughness profiles of the convex-concave structure Ra is less than 10 nanometers, the transverse distance between the convex-concave structures is 100 microns, the head and tail of the convex-concave structure are connected in the longitudinal direction, and the back surface of the light guide plate is a plane. Since the spread reflection surface is used, the surface specular reflection of the light guide plate can be prevented evidently.

### Embodiment of the light guide plate 2:

As shown in fig. 7, the upper end faces of the light guide plate are provided with light sources, and the outer surface of the light guide plate is a circular arc wave surface.

The guide line of the circular arc wave surface 701 is formed by connecting convex and concave circular arcs, each of the arcs has a chord length of 125 microns and a chord height of 15 microns. The mean deviation of the roughness profiles of the convex-concave surface Ra is controlled to be less than 20 nanometers.

After the light emitted from the light sources 703 enters the light guide plate, the light travels in the light guide plate, the intensities of the light are dependent on the angles of the light, the spatial distribution of the intensities is shown by a curve 704, the direction of the centre line of the spatial distribution is generally referred as the pointing direction of the working light 705. The pointing direction generally is the direction of the maximum light intensity.

As mentioned above, an important factor affecting the surface loss is the aspect ratio of the strip convex-concave structure, the greater the mean aspect ratio, the smaller the surface curve loss. The curve loss of the wave surface with the linear generatrix is the lowest.

For the wave surface with the linear generatrix, the smaller the included angle between the pointing direction of the working light and the direction of the generatrix, the lower the curve loss. When the pointing direction of the working light is parallel with the generatrix, the light travelling in the light guide plate is mainly transmitted by total reflection, the surface curve loss is the lowest, so that when the light guide plate is applied on the lighting blackboard, the loss can be omitted.

Similarly, for the light guide plate with trip convex-concave structures, the smaller the included angles between the pointing directions of the working light and the extending directions of the convex-concave structures, the lower the curve loss.

When the pointing direction of the working light is perpendicular to the generatrix of the wave surface or the extending direction of the trip convex-concave structure, the curve loss is the greatest.

### Embodiment of the light guide plate 3:

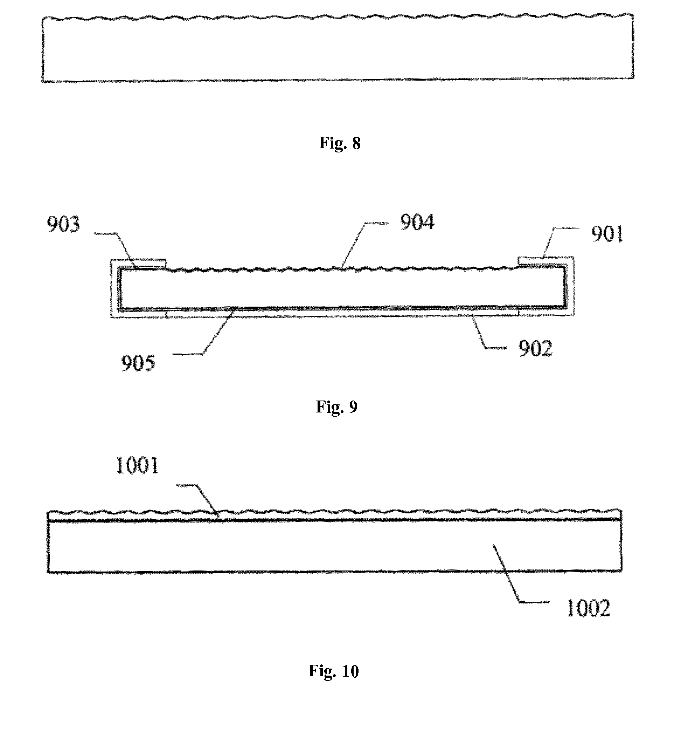

Fig. 8 is a cross sectional view of a spread reflection light guide plate. One surface of the plate is a spread reflection surface, the other is a plane.

Of course, both surfaces of the light guide plate can be spread reflection surfaces, the embodiment of which isn't illustrated.

### Embodiment of the light guide plate 4:

Fig. 9 is a schematic view of a light guide plate according to the embodiment, wherein part of the surface of the light guide plate uses a spread reflection surface. As shown in the figure, the partial area 903 of the front surface of the light guide plate covered by a frame 901 is a plane surface, the uncovered area 904 is a spread reflection surface, the back surface of the light guide plate 905 is a plane surface. This light guide plate is able to eliminate surface specular reflection. When the partial area 903 covered by the frame 901 is a plane surface, the curve loss and the production cost can be reduced.

As known, the structures of the light guide plate include a single layer structure, a bilayer structure and a multilayer structure. In fact, not only do the light guide plate with the single layer structure use the spread reflection surface, but also the light guide plate with the multilayer structure can use the spread reflection surface.

Preferably, the light guide plate is compounded of two or more layers of materials, the surface layer uses a spread reflection surface.

### Embodiment of the light guide plate 5:

In fig. 10, the light guide plate is compounded of two layers of materials, i.e. a surface layer 1001 and an inner layer 1002. The outer surface of the surface layer 1001 includes convex-concave structures which form a spread reflection surface, the spread reflection surface can achieve the effect of diffuse reflection, so that specular reflection interference can be reduced.

Preferably, the surface layer in the layer materials of the light guide plate is thinner than the inner layer.

More preferably, the thickness of the surface layer is in the range of 30 microns to 3 millimeters. The layer structure with the thickness in the range of 30 microns to 800 microns is referred as a film, the layer structure with the thickness in the range of 800 microns to 3 millimeters is referred as a sheet. A film or sheet with a spread reflection surface can be referred as a spread reflection film or sheet.

The spread reflection film or sheet can be compounded with the single layer or multilayer light guide plate to form a spread reflection light guide plate.

A lighting blackboard generally has a large size, such as a width of more than 1 meter and a length of more than 2 meters, and the convex-concave structures of the surface of the light guide plate are required to be optically smooth and have accuracy requirement in manufacture. So that it is very difficult to manufacture the lighting blackboard if a whole cast or an injection molding are used to manufacture the lighting blackboard.

However, if the outer surface of a film or a sheet is processed to a spread reflection surface, a heating roll forming and the like can be selected as the process for continuously high-speed production of the lighting blackboard, thus the processing difficulty is reduced, the production speed can be improved and the production cost is lower.

### Embodiment of the light guide plate 6:

A spread reflection PET film is provided, the film is made by heating roll forming. Particularly, a wave convex-concave structure with a parabola generatrix is formed by rolling on a PET film with a thickness of 30 microns, the guide line of the wave surface is a wave line formed by connecting symmetrical convex and concave parabolic curves with a width of 15 microns and a height of 1.5 microns.

### Embodiment of the light guide plate 7:

A spread reflection sheet is provided, the sheet is made by heating roll forming. Particularly, a circular arc wave surface is formed by rolling on a PMMA sheet with a thickness of 3 millimeters, the guide line of the wave surface is a wave line formed by connecting convex and concave circular arcs with a of a chord length of 400 microns and a chord height of 5 microns.

Embodiments of the light guide plate 6, 7 can be compounded with a single or multiple inner layer layered material to form a layered spread reflection light guide plate.

Preferably, the inner layer uses the material with good transparency and transmission ability, such as PMMA (Polymethyl Methacrylate), or PC (Poly Carbonate), or ultra-white glass.

### Embodiment of the light guide plate 8:

A compounded layer light guide plate is provided, plane ultra-white glass is used as the inner layer light-transparent material, the outer surface of the light guide plate uses PET plastic film strengthened and hardened, the outer surface of the plastic film is made as a spread reflection surface. The layer light guide plate compounded by gluing the glass and spread reflection PET film has the advantage of good impact resistance, even if the materials of the light guide plate are damaged, a lot of particles of glass will not be generated, therefore, the security is higher than glass.

The compound of different layer materials can also improve wearability of the light guide plate.

In preferred layer materials of the light guide plate, the hardness and wearability of the surface layer is better than that of the inner layer, which is helpful to improve the service life of the light guide plate.

There are many kinds of materials used for the surface layer, the materials include but not limited to wear-resistant material, self-cleaning material, self-repairing material, hard material, and self-lubricating material. Depending on the requirements of applications, the material can be selected.

### Embodiment of the light guide plate 9:

In layer materials of the light guide plate, the reflective index of the surface layer is smaller than that of the inner layer, thus the surface reflection can be further reduced.

A spread reflection film is provided, the surface layer of the film uses PMMA film with a thickness of 0.3 millimeter, the inner layer uses PC sheet with a thickness of 5 millimeters, the reflective index of the surface layer PMMA film is slightly smaller than that of the inner layer PC sheet.

If the surface of the PMMA film is coated by organic silicon resins, the reflective index of the surface can be further reduced to about 6% to 7% which are much less than the reflective index 8% to 9% of PC surface of inner layer.

The selection of the materials should refer to characteristics of the materials. Preferably, the materials can be selected from some common materials in a sequence: PMMA, PP, PVC, PC, PET.

There are many compound manners for each layer of the layer light guide plate, preferred manners include adhesion, press fit, heat sealing, vacuum absorption, and static electricity absorption. The compound manners include but not limited to the above-mentioned manners, there are many manners in the prior art which can be used.

### Embodiment of the light guide plate 10:

When one surface of the film is set as a spread reflection surface, the film acts as a spread reflection film. Alternatively, the other surface of the spread reflection film can be coated by a sticking layer used for compounding with other layer.

A sticking spread reflection light guide plate is provided. By means of heating mold pressing, a PET spread reflection film with a thickness of 30 microns is formed, one surface of the film is a circular arc spread reflection wave surface, the guide line of the wave surface is formed by connecting convex and concave circular arcs with a chord length of 150 microns and a chord height of 15 microns, the wavelength of the wave surface is 300 microns, the mean deviation of the surface roughness profiles of the convex-concave structure Ra isn't greater than 50 nanometers. The other surface of the PET spread reflection film is coated by an optical adhesive to produce a sticking spread reflection film. The spread reflection film is bonded with plane glass to form a spread reflection light guide plate with the bonded film.

### Embodiment of the light guide plate 11:

A layer spread reflection light guide plate is provided. By using casting process, ultra-white glass is made as a spread reflection glass sheet with a thickness of 1 millimeter, and then the glass sheet is bonded with PMMA with a thickness of 5 millimeters, so that a light guide plate with a spread reflection surface is produced. The surface of this light guide plate is stronger than the surface made from plastic material, and has stronger impact resistance than that of the whole light guide plate made from glass.

### Embodiment of the light guide plate 12:

A layer light guide plate with two spread reflection surface is provided, the layer light guide plate includes a PMMA light guide plate with a thickness of 5 millimeters, one surface of the layer light guide plate is a spread reflection surface by casting, the other surface is plane, the plane surface is bonded with a spread reflection film with a thickness of 0.2 millimeter and made from PET material, thus both surfaces of the light guide plate are spread reflection surfaces.

### Spread reflection lighting blackboard

The spread reflection lighting blackboard at least includes light sources and a light guide plate. The light guide plate uses the spread reflection light guide plate according to the present invention.

### Embodiment of the lighting blackboard 1:

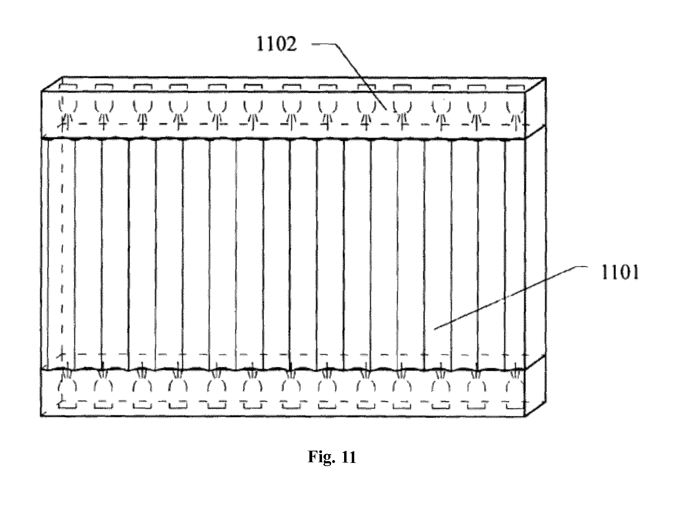

Fig. 11 shows a lighting blackboard according to a preferred embodiment of the present invention. The lighting blackboard includes a spread reflection light guide plate 1101 and light sources 1102. Other alternative constituents are not shown. The light emitted from the light sources 1102 travels in the light guide plate and is totally reflected. The light emits from the places on the surface of light guide plate on which there is handwriting, thus the handwriting appears to be lighting.

Since the spread reflection light guide plate is used, the surface of the lighting blackboard can achieve the effects of spread reflection similar to the diffuse reflection, so that the specular reflection glare of the light guide plate can be overcome, visual interruptions caused by mirror images generated by specular reflection are eliminated. The handwriting on the blackboard is clear and bright, and contrast is high.

Comparing with common lighting blackboards based on classical light guide plate, the spread reflection lighting blackboard eliminates the interruptions of specular reflection glare and visual disturbances caused by the specular reflection glare, for example, partial handwriting is difficult to recognize. Therefore, the spread reflection lighting blackboard has made essential improvement.

### Embodiment of the lighting blackboard 2:

The convex-concave structures of the surface of the lighting blackboard are set to extending in a vertical direction.

According to the arrangement of a standard classroom in China, fluorescent lamps are arranged to be perpendicular to the surface of a blackboard in the classroom. When the extending direction of the convex-concave structures of the surface of the lighting blackboard is set to be vertical, the anti-reflective effects of the spread reflection wave surface can be used to the greatest extent.

### Surface forming method

The convex-concave optical smooth surface can be produced by many known methods, such as a precise press molding process used for the production of plastic lens. Those methods can produce the smooth convex-concave surface in one-time molding process, however, the difficulty of the process is greater.

A manufacturing method for a surface texture of a light guide plate is further provided according to the present invention, the method includes the first forming step and the second polishing step.

Firstly, known forming methods, such as machine-finishing forming, ink-jet printing, etching forming, calendaring molding, can be used for manufacturing the convex-concave structures of the surface. The manufactured surface generally has a greater roughness and doesn't meet the requirements of optical smoothness, so that polishing treatment is needed.

Known polishing methods include mechanical polishing, heating polishing, ultrasound polishing and so on, however, the efficiency of those polishing processes is low when applied on the light guide plate with a large size, in addition, those methods may seriously damage the fine convex-concave structures.

The polishing method according to the present invention includes coating a transparent coating layer, such as varnish, on a surface to be polished, then drying and solidifying the coating layer to obtain a transparent coating layer, wherein the surface of the layer is optically smooth. The rough surface to be polished is replaced by the smooth surface of the transparent coating layer, the smooth surface is similar to a polished surface. The polishing method can be referred as a coating polishing method.

### Embodiment of surface forming method 1:

Coating the surface to be polished with silicone resin; drying the surface for 15 to 30 minutes under 40 °C to 60 °C, preferably, for 20 minutes under 40 °C; then solidifying the coated silicone resin for 2 to 3 hours under 80 °C to 90 °C, preferably, solidifying the coated silicone resin for 3 hours under 80 °C. At last, a transparent coating film with a thickness of 3 to 10 microns can be made. The film is adhered to the wave surface, the original rough surface is replaced, the surface of the film is optically smooth, and the mean deviation of the roughness profiles Ra is less than 10 nanometers.

### Embodiment of surface forming method 2:

Coating the surface to be polished with hardened resin and solidifying the hard resin with ultraviolet light. Particularly, the coating layer is heated to get dry by infrared light in the condition of a relative humidity under 60%, the coated surface is radiated by using an ultraviolet solidifying lamp to solidify a film, the surface of the formed film is optically smooth, the mean deviation of the roughness profiles Ra is less than 50 nanometers.

### Embodiment of surface forming method 3:

According to a precise planning method, an acrylic sheet is precisely planed by using a planning tool whose cutting edge outline is a circular arc wave line, in order to shape the surface of the sheet as a circular arc wave surface. The mean deviation of the roughness profiles of the circular arc wave surface Ra can be controlled at the micron scale, however, it still can't meet the requirement of optical smoothness.

Surface forming methods according to embodiments 1, 2 can be used for polishing the surface of the sheet. Thus the smoothness can be efficiently improved to make the mean deviation of the roughness profiles Ra less than 50 nanometers.

The sheet polished by the coating polishing can be used for manufacturing the spread reflection light guide plate, and then the light guide plate can be used for manufacturing the spread reflection lighting blackboard.

The coating polishing can also be used for polishing the spread reflection film and the spread reflection sheet.

### Embodiment of surface forming method 4:

Preferably, the coating used for the film with higher hardness or wearability than the material to be coated is selected in order to extend the service life of polished constituents.

In this embodiment, the light guide plate is made from PMMA material, the hardness of the surface of the light guide plate is lower than pencil hardness 2H, the surface of the light guide plate can be scratched easily, even by a tissue. By using hardened silicon resin for coating the surface of the light guide plate, the hardness and wearability of the surface can be largely improved, the hardness can be improved to the largest value 7H to 9H, so that the service life can be extended.

Other hardening and wear-resisting coatings, such as ultraviolet light hardening and wear-resisting coatings and heating hardening and wear-resisting coatings, can be selected, the present invention is not to limit the coatings.

### Embodiment of surface forming method 5:

Preferably, the coating used for the film with a lower reflective index than the material to be coated is selected. It is helpful to reduce the total reflection level of the surface.

In this embodiment, the light guide plate is a layer compounded light guide plate, the inner layer of the light guide plate uses ultra-white glass with a thickness of 5 millimeters, the outer layer uses a spread reflection film with a thickness of 200 microns produced by performing a rolling process on PC resin, the surface has wave convex-concave structures, those layers are compounded via vacuum absorption. The surface of convex-concave structure of the spread reflection film is polished by using ultraviolet light for solidifying the silicone resin, the reflective index of the surface can be reduced from 8% to 9% of PC material to 7%, it is relatively reduced by above 10%.

The above surface forming methods can be used in other situations rather than the light guide plate. For example, in the production of optics lens by injection molding, surface finish can be improved by using coating polishing, thus the mean deviation of the surface roughness profiles Ra can achieves a high surface finish less than 10 microns.

The above descriptions only are implementations of the present invention, the scope of the present invention is only limited to these descriptions. Many simple deductions or replacements may further be made by those of ordinary skill in the art without departing from the conception of the present invention, and all of the deductions or replacements shall be considered to be covered within the protection scope of the present invention.

## Claims

1. A surface texture of a light guide plate, wherein the surface texture is provided with convex-concave structures, outer surfaces of the convex-concave structures are optically smooth.

2. The surface texture of the light guide plate according to claim 1, wherein an arithmetical mean deviation of roughness profiles of the optically smooth surface is not greater than 1/8 the shortest wavelength of working light in the light guide plate.

3. The surface texture of the light guide plate according to claim 1, wherein an arithmetical mean deviation of roughness profiles of the optically smooth surface is not greater than 50 nanometers.

4. The surface texture of the light guide plate according to claim 1, wherein an arithmetical mean deviation of roughness profiles of the optically smooth surface is not greater than 10 nanometers.

5. The surface texture of the light guide plate according to claim 1, wherein the convex-concave structure is selected from any one or combination of a hill-like convex-concave structures, a strip convex-concave structure and a wave convex-concave structure.

6. The surface texture of the light guide plate according to claim 5, wherein a guide line of the surface of the convex-concave structure is selected from any one or combination of regular curves, such as a circular arc wave line, ellipse wave line, sine wave line, parabola wave line, and randomly irregular wave lines.

7. The surface texture of the light guide plate according to any one of claims 1 to 6, wherein a width of the convex-concave structure is in the range of 3 microns to 10 millimeters.

8. The surface texture of the light guide plate according to any one of claims 1 to 6, wherein a width of the convex-concave structure is in the range of 30 microns to 1 millimeter.

9. The surface texture of the light guide plate according to any one of claims 1 to 6, wherein a width of the convex-concave structure is in the range of 100 microns to 300 microns.

10. A light guide plate comprising two outer surfaces opposite to each other, wherein at least partial area of one of the two outer surfaces uses the surface texture according to any one of claims 1 to 9.

11. The light guide plate according to claim 10, wherein an extending direction of the convex-concave structure is parallel with a pointing direction of working light in the light guide plate.

12. The light guide plate according to claim 10, wherein the light guide plate is composited by layered materials.

13. The light guide plate according to claim 12, wherein a surface layer in the layered materials has a thickness of 30 microns to 3 millimeters.

14. The light guide plate according to claim 12, wherein hardness and wearability of a surface layer in the layered materials are higher than hardness and wearability of an inner layer in the layered materials.

15. The light guide plate according to claim 12, wherein reflective index of a surface layer in the layered materials is lower than reflectance of an inner layer in the layered materials.

16. A lighting blackboard comprising a light guide plate and light sources, the light sources being arranged at end faces of the light guide plate, wherein the lighting blackboard comprises the light guide plate according to any one of claims 10 to 15.

17. The lighting blackboard according to claim 16, wherein the extending direction of the convex-concave structure of the surface of the light guide plate of the lighting blackboard is vertical.

18. A surface forming method comprising manufacturing convex-concave structures on a surface of a base material and then polishing surfaces of the convex-concave structures, wherein the polishing step comprises: coating a surface of a material to be polished with a transparent coating; and solidifying the transparent coating to a film, wherein a surface of the film is optically smooth.

19. The surface forming method according to claim 18, wherein the transparent coating is selected from materials used for forming the film with higher hardness or wearability than material to be polished.

20. The surface forming method according to claim 18, wherein the transparent coating is selected from materials used for forming the film with a lower reflective index than material to be polished.
